# EUROPEAN PATENT APPLICATION

(11) **EP 2 945 157 A2**
(43) Date of publication of application: **18.11.2015**
(21) Application number: 15165890.3
(22) Date of filing: 30.04.2015
(51) Int. Cl.: G10L 15/30

(54) **INFORMATION PROVISION METHOD USING VOICE RECOGNITION FUNCTION AND CONTROL METHOD FOR DEVICE**

(30) Priority: 13.05.2014 JP 2014099550; 14.05.2014 JP 2014100223; 02.02.2015 JP 2015018416
(71) Applicant: Panasonic Intellectual Property Corporation of America, Torrance, CA 90503 (US)
(72) Inventor: Ishii, Yasunori, Chuo-ku, Osaka 540-6207 (JP); Kojima, Yoshihiro, Chuo-ku, Osaka 540-6207 (JP)
(74) Representative: Grünecker Patent- und Rechtsanwälte PartG mbB

(57) **Abstract**

According to one embodiment, there is provided an information provision method in an information provision system connected to a display device having a display and a voice input apparatus capable of inputting a user's voice for providing information via the display device in response to the user's voice. The method includes transmitting display screen information for displaying a display screen including a plurality of selectable items on the display to the display device, receiving item selection information indicating selection of one of the plurality of items on the display screen, recognizing instruction substance if a voice instruction including first voice information representing the instruction substance is received from the voice input apparatus when the one item is selected, judging whether the voice instruction includes second voice information indicating a demonstrative term, and executing the instruction substance for the one item if a positive judgment is made.

## Description

### BACKGROUND

### 1. Technical Field

The present disclosure relates to an information provision method using a voice recognition function and a control method for a device.

### 2. Description of the Related Art

There has been available an apparatus which controls a device by accepting a voice by means of a microphone (hereinafter also referred to as a "mic"), recognizing the accepted voice, and interpreting a recognition result. The microphone may be connected to the device or may be built in an input apparatus supplied with the device (for example, a remote controller (hereinafter also referred to as a "remote control"). Voice-based device control allows users to be offered unprecedented convenience, such as power-on/power-off or collective control of devices.

Control commands for device control include ones suitable for being input through voice recognition and ones not suitable. For this reason, device control using a multimodal input method which is a combination of voice and an input apparatus, such as a remote control, is desirable. Japanese Unexamined Patent Application Publication No. 2004-260544 discloses a device control method which is a combination of a remote control and voice recognition.

### SUMMARY

The above-described device control method using a voice recognition function needs further improvement for practical use.

In one general aspect, the techniques disclosed here feature an information provision method in an information provision system connected to a display device having a display and a voice input apparatus capable of inputting a voice of a user for providing information via the display device in response to the voice of the user, including transmitting display screen information for displaying a display screen including a plurality of selectable items on the display of the display device to the display device, receiving item selection information indicating that one item of the plurality of items is selected on the display screen of the display, recognizing instruction substance from first voice information representing the instruction substance if a voice instruction including the first voice information is received from the voice input apparatus when the one item is selected, judging whether the voice instruction includes second voice information indicating a demonstrative term, and executing the instruction substance for the one item if the voice instruction is judged to include the second voice information.

In the one aspect, access between a server and a client during device control is reduced, which enhances operability.

With the aspect, further improvement has been achieved.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a sequence chart showing the summary of processing according to an exemplary first embodiment;
Fig. 2 is a diagram showing the configuration of an information presentation method using a voice recognition function according to the exemplary first embodiment;
Fig. 3 is a chart showing a first sequence indicating communication processing between a server and a client according to the exemplary first embodiment;
Fig. 4 is a chart showing processing in the server according to the exemplary first embodiment;
Fig. 5 is a chart showing processing in the client according to the exemplary first embodiment;
Fig. 6 is a view showing an example in which a location on a map is designated;
Fig. 7A is a first view showing an example in which the location of a person on a screen is designated;
Fig. 7B is a second view showing the example in which the location of the person on the screen is designated;
Fig. 8A is a first view showing an example of a search based on a location on a map;
Fig. 8B is a second view showing the example of the search based on the location on the map;
Fig. 9 is a chart showing a second sequence representing communication processing between the server and the client according to the exemplary first embodiment;
Fig. 10 is a first sequence chart showing the summary of processing according to the exemplary first embodiment;
Fig. 11 is a second sequence chart showing the summary of processing according to the exemplary first embodiment;
Fig. 12 is a diagram showing the configuration of an information presentation method using a voice recognition function according to an exemplary second embodiment;
Fig. 13 is a chart showing a sequence representing communication processing between a server and a client according to the exemplary second embodiment;
Fig. 14 is a chart showing processing in the server according to the exemplary second embodiment;
Fig. 15 is a chart showing processing in the client according to the exemplary second embodiment;
Fig. 16 is a view showing an example in which the details of a program are displayed from a list of recommended programs; and
Fig. 17 is a diagram showing the configuration of an information presentation method using a conventional voice recognition function.

### DETAILED DESCRIPTION

### (Underlying Knowledge Forming Basis of the Present Disclosure)

The underlying knowledge forming the basis of the present disclosure is as described below.

The present inventors thought that an apparatus for controlling a device by accepting a voice by means of a mic, recognizing the accepted voice, and interpreting a recognition result needed further improvement for practical use.

In voice-based device control, assignment of a plurality of control commands to one voice command allows device control with a simple word. The voice-based device control has the advantage that even a user unaccustomed to operation of a remote control with many buttons can control a device with a natural voice.

Meanwhile, performing all operations by voice impairs operability for a user. This will be illustrated in the context of a television (TV).

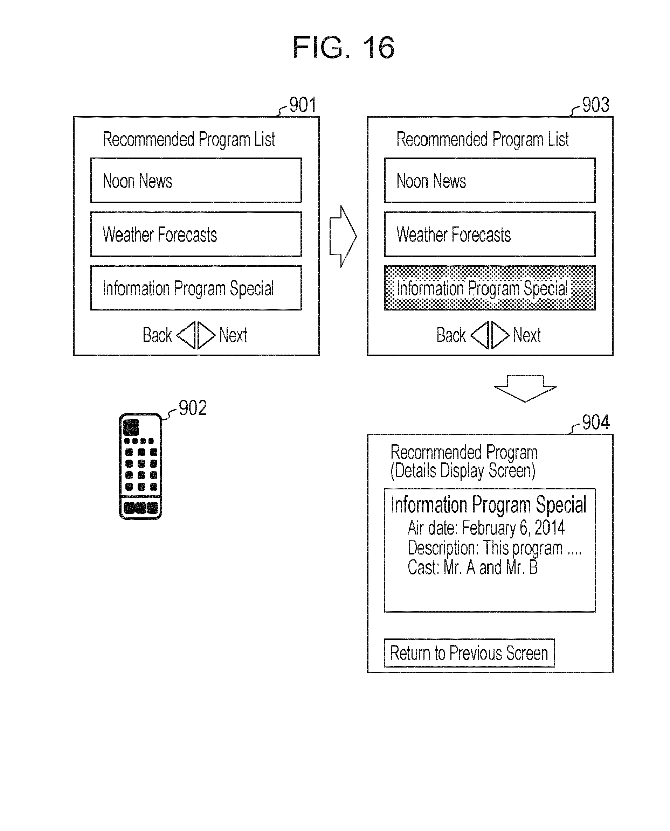

Fig. 16 is a view showing an example of a screen to be displayed on a television. For example, assume that the voice command "recommended program list" causes a list 901 of programs to be displayed on the screen, as shown in Fig. 16. This is, for example, a function of the TV of accepting a voice of a user via a remote control 902, recognizing the phrase "recommended program list" (that is, the voice), and interpreting a recognition result to cause the device (that is, the TV) to present a recommended program tailored to the user. To designate a program, the user utters the command "up" or "down" for cursor movement.

If many recommended programs are displayed, the number of programs to be displayed at one time is large. Content to be displayed may spread over a plurality of pages. In this case, to designate a program, a user needs to utter many commands for cursor movement, such as "down", "up", "next page", and "previous page". Repetitive voice input increases the possibility of voice misrecognition. The method involving issuance of the same words many times is far from easy to use.

As for such a problem, for example, Japanese Unexamined Patent Application Publication No. 2004-260544 discloses a voice recognition method capable of easily operating a television by means of a combination of a remote control and voice recognition.

In this conventional method, when a recommended program list is displayed by a voice command as described above, a user first designates a program with a remote control. After that, the user controls the program designated with the remote control by inputting a voice composed of a pair of a demonstrative pronoun (which may also referred to as a "demonstrative term" or a "demonstrative character string") and a phrase for controlling the designated program (that is, instruction substance). For example, if the user designates a program with the remote control 902 when the program list 901 is displayed, a current screen changes to a screen state 903 from which the program is found to be selected. After that, if the user utters, "Display its details", the details of the program designated by the remote control are displayed, as in a program details display screen 904. In this example, "its" corresponds to a demonstrative term while "Display...details" corresponds to instruction substance. In the present specification, voice information representing instruction substance may be referred to as "first voice information", and voice information representing a demonstrative term may be referred to as "second voice information".

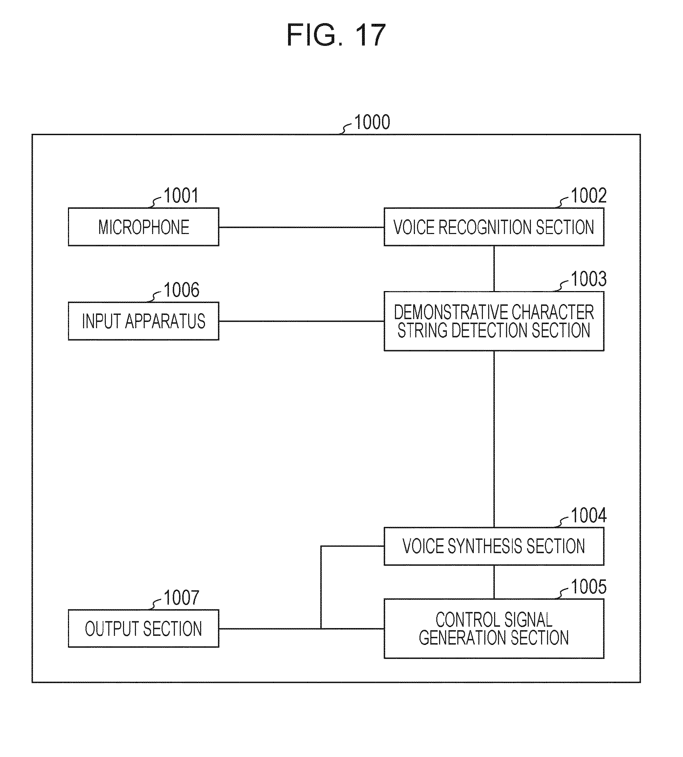

Fig. 17 shows an example of the configuration of a program information presentation apparatus 1000 which implements the conventional voice recognition method described in Japanese Unexamined Patent Application Publication No. 2004-260544. In Fig. 17, a voice is input through a microphone 1001, and a voice recognition section 1002 performs voice recognition. A demonstrative character string detection section 1003 extracts a demonstrative character string from a voice recognition result. A voice synthesis section 1004 generates a synthesized voice for responding to a user by voice. A control signal generation section 1005 generates a signal for controlling a device. An input apparatus 1006 is composed of a mouse, a touch panel, a keyboard, a remote controller, and the like. The input apparatus 1006 is used by a user to select one of a plurality of programs when pieces of information for the plurality of programs are displayed. The input apparatus 1006 accepts information on a selected location when one program is selected by the user from among the plurality of programs displayed on a screen. An output section 1007 performs output processing, such as output processing that displays a selected program, device control based on a signal generated through control signal generation processing, display of a control result, and playback of a synthesized voice generated through voice synthesis processing.

If voice commands are used instead of buttons provided at a remote control, the number and types of words uttered are limited by the number of buttons. For this reason, names on the buttons of the remote control or voice commands corresponding to the buttons may be registered in advance as a dictionary for recognition. Voices of people different in age and sex are collected for each word registered in the dictionary to construct an acoustic model and a language model for voice recognition. To reduce misrecognition, contrivances, such as manual customization of the dictionary for recognition or the models, may be employed.

The advent of a household appliance capable of linking to a network outside home has allowed acquisition of program information from the Web and a Web search using a TV screen. In this case, words unrelated to a TV may be input, and it is difficult to know in advance what words are input. That is, an acoustic model and a language model specific to a group of words determined in advance cannot be prepared. This results in a reduction in voice recognition accuracy and makes it difficult to input, by voice, a word a user desires.

To recognize a word other than words on a remote control with high accuracy, it is necessary to construct a model for voice recognition with a large group of data. Construction of a statistical voice recognition model using a large group of data allows high-accuracy recognition of unknown words. Since voice recognition processing based on a statistical model needs much resources, such as a memory and computational complexity, the voice recognition processing is executed on a server computer (hereinafter may be simply referred to as a "server") which is linked to a device via a network.

In the technique disclosed in Japanese Unexamined Patent Application Publication No. 2004-260544, a device main body as a control object is integral with a voice recognition processing section. It is thus possible to prepare in advance a voice recognition dictionary for a description on a remote control which controls the device main body. In contrast, voice recognition accuracy is low for free utterance in a Web search or the like. A user often feels that voice recognition is awkward to use, and the user has no choice but to limit the range of utilization of voice recognition.

From the above-described consideration, it is practically desirable to perform voice recognition processing of a voice signal accepted by a device on a server. However, in the case of voice recognition processing via a network, the time from transmission of a voice signal to reception of a response is long. That is, the case suffers from the problem of occurrence of a processing delay.

Assume, as an example of a system with such a problem, a system which performs voice recognition processing to detect a demonstrative character string from a recognition result and then returns a voice response or a control signal in accordance with a result of the demonstrative character string detection. If voice recognition processing is executed on a server, a series of processes, voice recognition processing and demonstrative character string detection, voice responding based on a recognition result, and device control, is performed on the server. In this case, every time a demonstrative character string is detected in a voice recognition result, the server gains access to a device as a client. This is to inquire what an object item referred to by a demonstrative character string (for example, "that") is. Subsequent processing is not performed until communication processing between the server and the client ends, which can cause a processing delay. This system is needed to reduce processing delays caused by access of the server to the client after each demonstrative character string detection. However, a technical solution for meeting the need has not been discussed yet.

According to one aspect of the present disclosure for solving the above-described problem, there is provided a device control method using a voice recognition function, including input processing that accepts an input from a user, selection condition detection processing that detects a condition indicating whether a part on a screen is designated in the input processing, selected information detection processing that acquires internal information related to a location on the screen of a selected one item, output processing that returns a response to the user, communication processing that communicates with an external apparatus, voice input processing that inputs a voice, voice recognition processing that recognizes the voice, demonstrative character string detection processing that detects a demonstrative character string on a basis of a voice recognition result, and selection condition management processing that manages a condition of item selection by the user. A server which is different from a control object device is caused to execute the voice input processing, the voice recognition processing, the demonstrative character string detection processing, and the selection condition management processing. Every time the selection condition detection processing senses that a selection condition is changed, a condition of the selection condition management processing is updated. Only if an update result indicates a selected state, the demonstrative character string detection processing acquires the selected information detected in the selected information detection processing.

With the selection condition management processing, the server holds information related to a condition indicating whether one item (for example, an item indicating a program) is selected by an input apparatus. It is thus possible to select whether to gain access to a client by the server in accordance with the condition held in the server when the voice recognition processing is performed on the server. This allows a reduction in processing delays.

The above-described device control method may further include dialog management processing and response sentence generation processing and may perform device control through interactive processing with the user.

The above-described device control method may further include voice synthesis processing and control signal generation processing and may return a response with a synthesized voice or perform device control with a generated control signal at the time of returning the response to the user in the output processing.

The selection condition management processing may manage only the condition indicating whether a part on the screen is selected in the input processing.

The selection condition management processing may manage internal information corresponding to a selected place, in addition to the condition indicating whether a part on the screen is selected in the input processing.

The input processing may designate either metadata related to a television program or content of a television program.

The metadata related to the television program may be any one of a program title, a channel name, a description, an attention degree, and a recommendation degree.

The content of the television program may include any one of a person, an animal, a car, a map, a character, and a numeral.

According to another aspect for solving the problem, there is provided an information provision method in an information provision system connected to a display device having a display and a voice input apparatus capable of inputting a voice of a user for providing information via the display device in response to the voice of the user, including transmitting display screen information for displaying a display screen including a plurality of selectable items on the display of the display device to the display device, receiving item selection information indicating that one item of the plurality of items is selected on the display screen of the display, recognizing instruction substance from first voice information representing the instruction substance if a voice instruction including the first voice information is received from the voice input apparatus when the one item is selected, judging whether the voice instruction includes second voice information indicating a demonstrative term, and executing the instruction substance for the one item if the voice instruction is judged to include the second voice information.

The instruction substance may be an instruction to search for information related to the one item, and the information provision method may further include notifying the user of a result of a search based on the instruction substance.

The information provision method may further include transmitting search result information for displaying the result of the search on the display to the display device.

The information provision system may be further connected to a voice output apparatus capable of outputting a voice, and the information provision method may further include transmitting search result information for outputting the result of the search as a voice from the voice output apparatus to the voice output apparatus.

The plurality of items may each be an item which points to metadata related to a television program or content of a television program.

The metadata may indicate at least one of a television program title, a channel name, a summary of the television program, an attention degree of the television program, and a recommendation degree of the television program.

The content of the television program may include information indicating at least one of a person, an animal, a car, a map, a character, and a numeral.

The display screen may represent a map in a specific region, and the plurality of items may each be arbitrary coordinates on the map or an object on the map.

The object may indicate a building on the map.

The object may indicate a road on the map.

The object may indicate a place name on the map.

According to another aspect of the present disclosure, there is provided a device control method using a voice recognition function, including input processing that accepts an input from a user, selection condition detection processing that detects a condition indicating whether a part on a screen is designated in the input processing, selected information detection processing that acquires internal information related to a location on the screen of a selected one item, output processing that returns a response to the user, communication processing that communicates with an external apparatus, voice input processing that inputs a voice, first voice recognition processing that recognizes the voice, second voice recognition processing that is learned differently from the first voice recognition processing, demonstrative character string detection processing that detects a demonstrative character string on a basis of a voice recognition result, and order character string detection processing that detects an order character string on a basis of the voice recognition result. The output processing is performed in accordance with a result of the first voice recognition processing if it is detected in the selection condition detection processing that a part on the screen is selected in the input processing, and a demonstrative character string and an order character string are both detected. The output processing is performed in accordance with a result of the second voice recognition processing if no part on the screen is selected or if either a demonstrative character string or an order character string is not detected.

With the above-described configuration, if the screen is designated in the input processing, and a demonstrative character string and an order character string are detected, it is possible to return a response to the user without waiting for a voice recognition result from a server. Response delays in a voice dialog can be reduced, as compared to a conventional configuration.

The above-described device control method may further include dialog management processing and response sentence generation processing and may perform device control through interactive processing with the user.

The above-described device control method may further include voice synthesis processing that generates a synthesized voice and control signal generation processing that generates a control signal and may return a response with a synthesized voice or perform device control with a generated control signal at the time of returning the response to the user in the output processing.

The selection condition detection processing may manage only the condition indicating whether a part on the screen is selected in the input processing.

The selection condition detection processing may manage internal information corresponding to a selected place, in addition to the condition indicating whether a part on the screen is selected in the input processing.

The input processing may designate either metadata related to a television program or content of a television program.

The metadata related to the television program may be any one of a program title, a channel name, a description, an attention degree, and a recommendation degree.

The content of the television program may include any one of a person, an animal, a car, a map, a character, and a numeral.

According to another aspect for solving the problem, there is provided a control method for a display device connected to a voice input apparatus capable of inputting a voice of a user and having a display, the control method causing a computer of the display device to display a display screen including a plurality of selectable items on the display, sense that one item of the plurality of items is selected on the display screen of the display, recognize instruction substance from first voice information representing the instruction substance and execute the instruction substance if a voice instruction including the first voice information is received from the voice input apparatus when selection of the one item is sensed, and transmit the voice instruction to a different computer if selection of the one item is not sensed or if the instruction substance is judged to be inexecutable.

The control method may further cause the computer of the display device to judge whether the voice instruction includes second voice information indicating a demonstrative term, execute the instruction substance if selection of the one item is sensed, the instruction substance is recognized from the first voice information, and the voice instruction is judged to include the second voice information, and transmit the voice instruction to the different computer if selection of the one item is not sensed, if the instruction substance is not recognized from the first voice information, or if the voice instruction is not judged to include the second voice information.

The instruction substance may be an instruction to search for information related to the one item, and the control method may further cause the computer of the display device to notify the user of a result of a search based on the instruction substance.

The display device may be connected to a server via a network, and the control method may further cause the computer of the display device to refer to a database in the server and to search for information related to the one item in the database.

The control method may further cause the computer of the display device to display the result of the search on the display.

The voice input apparatus may be included in the display device.

The display device may be further connected to a voice output apparatus capable of outputting a voice, and the control method may further cause the computer of the display device to transmit search result information for outputting the result of the search as a voice from the voice output apparatus to the voice output apparatus.

The voice output apparatus may be included in the display device.

The plurality of items may each be an item which points to metadata related to a television program or content of a television program.

The metadata may indicate at least one of a television program title, a channel name, a summary of the television program, an attention degree of the television program, and a recommendation degree of the television program.

The content of the television program may include information indicating at least one of a person, an animal, a car, a map, a character, and a numeral.

The display screen may represent a map in a specific region, and the plurality of items may each be arbitrary coordinates on the map or an object on the map.

The object may indicate a building on the map.

The object may indicate a road on the map.

The object may indicate a place name on the map.

According to another aspect for solving the problem, there is provided a non-transitory recording medium storing a computer program to be executed by a display device connected to a voice input apparatus capable of inputting a voice of a user and having a display, the computer program causing a computer of the display device to display a display screen including a plurality of selectable items on the display, sense that one item of the plurality of items is selected on the display screen of the display, recognize instruction substance from first voice information representing the instruction substance and execute the instruction substance if a voice instruction including the first voice information is received from the voice input apparatus when selection of the one item is sensed, and transmit the voice instruction to a different computer if selection of the one item is not sensed or if the instruction substance is judged to be inexecutable.

According to another aspect of the present disclosure, there is provided a display device connected to a voice input apparatus capable of inputting a voice of a user, including a display, a controller, and a communicator, in which the controller displays a display screen including a plurality of selectable items on the display, senses that one item of the plurality of items is selected on the display screen of the display, recognizes instruction substance from first voice information representing the instruction substance and executes the instruction substance if a voice instruction including the first voice information is received from the voice input apparatus when selection of the one item is sensed, and instructs the communicator to transmit the voice instruction to a different computer if selection of the one item is not sensed or if the instruction substance is judged to be inexecutable.

Note that the embodiments described below are all specific examples of the present disclosure. Numerical values, shapes, constituent elements, steps, the order of the steps, and the like described in the embodiments below are merely illustrative, and are not intended to limit the present disclosure. Among the constituent elements in the embodiments below, those not described in an independent claim representing a top-level concept will be described as optional constituent elements. Components in all the embodiments may also be combined.

Exemplary embodiments of the present disclosure will be described below with reference to the accompanying drawings.

### (First Embodiment)

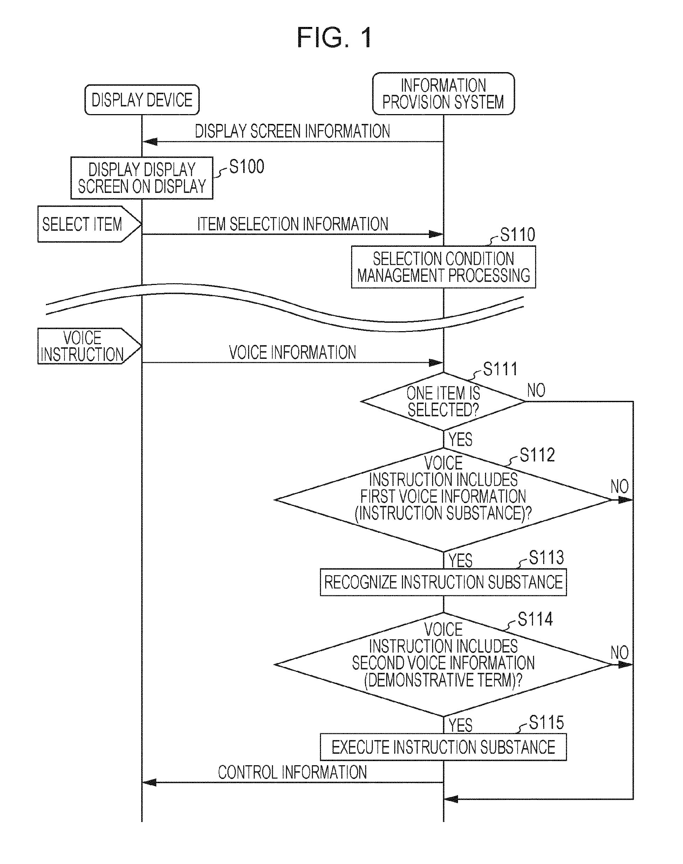

Fig. 1 is a sequence chart showing the summary of an information provision method to be executed for a display device by an information provision system according to the present embodiment. The information provision system according to the present embodiment is connected to a display device having a display and a voice input apparatus capable of inputting a voice of a user. The phrase "is connected" here means being electrically connected so as to allow transmission and reception of an electrical signal. The connection is not limited to wired connection and may be wireless. Even a state in which a different device (for example, a switching hub, a router, a personal computer (PC), or the like) is connected between the two devices, and transmission and reception of an electrical signal can be performed via the device also corresponds to a state in which the two devices are connected.

Typically, the information provision system can be a combination of one or more devices including a server computer. The information provision system transmits display screen information for displaying a display screen including a plurality of selectable items on the display of the display device to the display device. Upon receipt of the display screen information, the display device displays a display screen on the display (step S100). The display screen includes a plurality of selectable items. The plurality of items can each be, for example, an item indicating a television program as shown in Fig. 16 but is not limited to this. The plurality of items may each be an item which points to metadata related to a television program or content of a television program. Metadata can be, for example, data indicating at least one of the title of a television program, a channel name, the summary of the television program, the attention degree of the television program, and the recommendation degree of the television program. Content of a television program can include, for example, information indicating at least one of a person, an animal, a car, a map, a character, and a numeral. If the display screen includes an image of a map, the plurality of items can each be coordinate information which serves to identify a location on the map.

A user can select one item among from the plurality of items displayed on the display of the display device. For example, if a plurality of items indicating television programs are displayed, the user can select one item from among the plurality of items. If the display device includes a touch screen as the display, selection of an item can be performed through direct contact with the touch screen. If the display device causes an external display to display the display screen, selection of an item can be performed through, for example, operation of a mouse. The touch screen in the former case and the mouse in the latter case function as input apparatuses.

When one item of the plurality of items is selected on the display screen of the display, the display device transmits information to that effect (referred to as "item selection information") to a server included in the information provision system. Upon receipt of the item selection information, the server judges which item is selected and records (or updates) the selection condition (selected/unselected) of each item (step S110). This processing is referred to as selection condition management processing. The item selection information transmission and the selection condition management processing are executed every time the user changes a current item selection. In other words, the selection condition management processing performed upon selection of an item (or change of the current item selection) by the user can be executed any number of times before a voice instruction.

The user gives a voice instruction for the one item after selecting the item. For example, the user can give, by voice, an instruction to play back a television program corresponding to the selected item or an instruction to display the summary of the television program. Such an instruction can be given through, for example, uttering the phrase "Play back it" or "Display its contents". The instruction can include first voice information indicating instruction substance, such as "Play back" or "Display...contents", and second voice information indicating a demonstrative term, such as "it" or "its". The first voice information is associated with a control command for the display device. When the display device accepts a voice instruction of some type from the user, the display device transmits voice information of the voice instruction to the server.

Upon receipt of the voice information, the server judges whether one item is selected (step S111), whether the voice instruction includes first voice information (step S112), and whether the voice instruction includes second voice information (step S114). If a negative judgment is made in any of the three steps, the server ignores instruction substance and returns to a standby state. Alternatively, the server may transmit information to the effect that the instruction is not executed to the display device.

In step S111, the server refers to the selection condition information updated in the selection condition management processing (S110) and judges whether one item is selected. If one item is selected, the flow advances to step S112. In step S112, the server judges whether the voice instruction includes first voice information (that is, instruction substance). If the voice instruction is judged to include first voice information, the server recognizes instruction substance (step S113). In succeeding step S114, the server judges whether the voice instruction includes second voice information (that is, a demonstrative term). If the voice instruction is judged to include second voice information, the server executes the instruction substance (step S115). The execution of the instruction substance is performed by, for example, transmitting device control information and the like corresponding to the instruction as a request to the display device. Note that the order of steps S111, S112, and S114 is not limited to the order shown in Fig. 1 and that the steps may be interchanged.

With the above-described method, the server can know in real time an item selection condition on the display screen of the display device through the selection condition management processing (S110). After acceptance of a voice instruction, the server need not inquire of the display device about a selection condition, and access between the display device and the server can be reduced.

A more specific example of a system adopting a program information presentation method according to the present embodiment will be described.

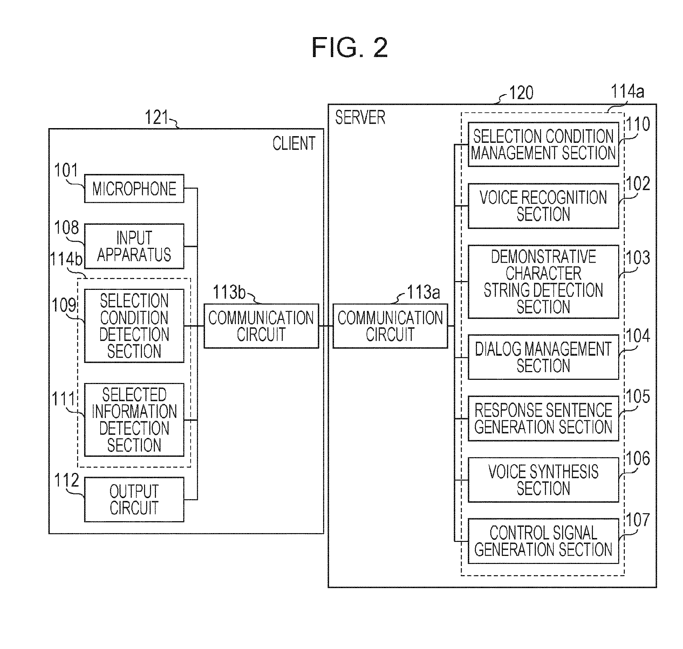

Fig. 2 shows the configuration of the system adopting the program information presentation method according to the present embodiment. The program information presentation method presents program information to a user using a voice recognition function of recognizing a voice of the user. The present system includes a client 121 and a server 120. The client 121 corresponds to the display device described earlier or the different device connected to the display device. The client 121 can be a device, such as a television, a recorder, a smartphone, or a tablet. In the example in Fig. 2, the client 121 includes a microphone 101 as a voice input apparatus, an input apparatus 108, an output circuit 112, a communication circuit 113b, and a control circuit 114b which controls the components. The control circuit 114b has a selection condition detection section 109 which detects selection of an item by a user and a selected information detection section 111 which detects location information on a display screen of a program designated by the input apparatus and information on the designated program.

The server 120 includes a communication circuit 113a which communicates with the client 121 and a control circuit 114a. The control circuit 114a has seven functional sections, a selection condition management section 110, a voice recognition section 102, a demonstrative character string detection section 103, a dialog management section 104, a response sentence generation section 105, a voice synthesis section 106, and a control signal generation section 107.

In the present embodiment, the microphone 101 as the voice input apparatus senses a voice signal from a user. The voice recognition section 102 of the server 120 converts the sensed voice signal into a character string. After that, processing is performed mainly by the server 120. The demonstrative character string detection section 103 detects a demonstrative pronoun included in the character string obtained through the conversion in the voice recognition section 102. The dialog management section 104 manages a history of interactive processing between a user and a device, a response strategy regarding what dialog processing is to be performed, and the like. Interactive processing here refers to processing related to a physical interface, such as a touch panel, or exchange of a message between a user and a device using voice or the like. Such history information and information used for a response strategy are stored in a recording medium (not shown), such as a memory.

The response sentence generation section 105 generates a character string for responding to a user in accordance with an input character string. The voice synthesis section 106 converts the character string generated by the response sentence generation section 105 into a voice. The control signal generation section 107 generates a device control command corresponding to the content of a dialog.

Note that although the voice synthesis section 106 has been described as generating a synthesized voice from text generated by the response sentence generation section 105 and presenting the voice to a user, this is merely illustrative. For example, if a display apparatus, such as a TV, is provided in the client 121, a character string may be displayed on the screen.

The input apparatus 108 can be, for example, a mouse, a touch panel, a keyboard, a remote controller, and the like. The input apparatus 108 allows a user to select one program when pieces of information for a plurality of programs are displayed on a display device, such as a display apparatus.

When a program is selected by the input apparatus 108, information on a selected location on the screen is acquired. The location information can be, for example, two-dimensional coordinate information. Other display areas that can be designated can be present on the display screen besides a plurality of selectable items indicating programs. For example, other display areas, such as a button for a page transition, a button for ending program selection, and a button for calling a different function, can be present. A user can designate such a display area. The selection condition detection section 109 in the client 121 detects whether any program is selected by the input apparatus 108. The detection can be performed by judging whether a designated location overlaps with the location of any item indicating a program. A detection result is sent to the selection condition management section 110 of the server 120 via the communication circuits 113b and 113a. The selection condition management section 110 manages information indicating whether any program is selected. For example, if any program is selected, 1 is set in an internal memory of the selection condition management section 110. On the other hand, if no program is selected, 0 is set in the internal memory. A value of the internal memory is updated in accordance with a selection condition.

The selected information detection section 111 detects location information of a program designated by the input apparatus 108, information on the designated program, and the like. The detected pieces of information are transmitted to the demonstrative character string detection section 103 via the communication circuits 113b and 113a. The output circuit 112 outputs information based on output results from the response sentence generation section 105, the voice synthesis section 106, and the control signal generation section 107. The output circuit 112 performs output processing, such as display of a response sentence on a display, playback of a synthesized voice with a speaker, device control based on a generated control signal, and display of a control result on a display.

The communication circuits 113a and 113b each include a communication module for communication between the server 120 and the client 121. The communication module performs communication using an existing communication scheme, such as Wi-Fi® or Bluetooth®. The communication module may be of any type as long as the communication module has the above-described function. A voice signal obtained through synthesis in the voice synthesis section 106 and a control signal for device control are transmitted to the output circuit 112. The output circuit 112 outputs a voice signal, a signal for device control, and information indicating a control result.

The above-described constituent elements of the control circuit 114a in the server 120 may be implemented by a computer (for example, a CPU) of the server 120 through executing a computer program or may be provided as separate, independent circuits or the like.

The above-described constituent elements (the selection condition detection section 109 and the selected information detection section 111) of the control circuit 114b in the client 121 may also be implemented by a computer (for example, a CPU) of the client 121 through executing a computer program or may be provided as separate, independent circuits or the like.

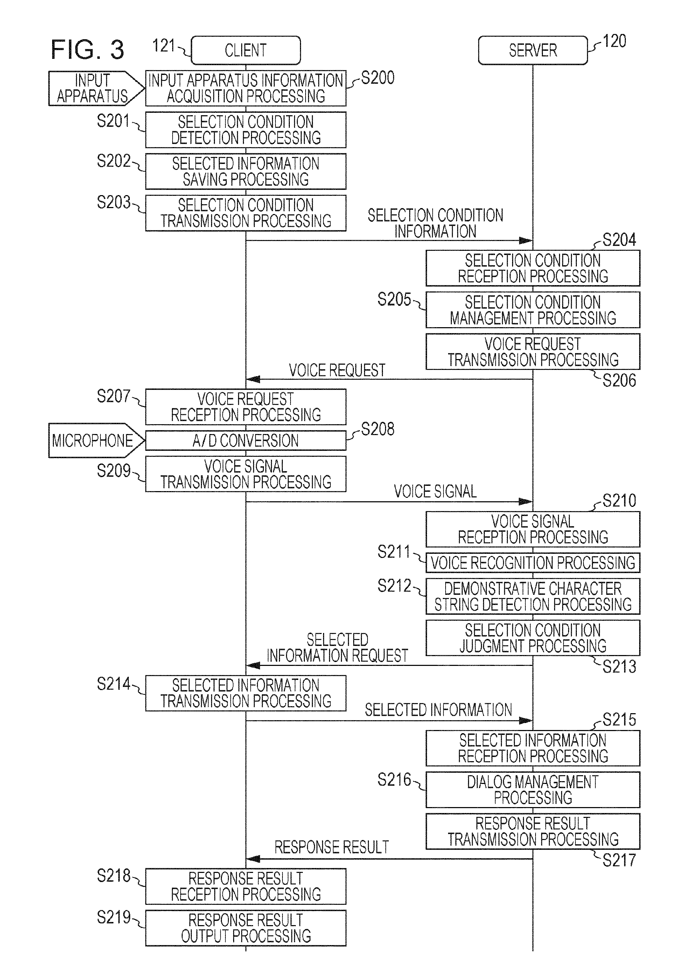

For example, processes to be described later by the server 120 shown in Fig. 3 can be implemented as a control method to be performed by the computer of the server 120 executing a computer program. Similarly, processes by the client 121 shown in Fig. 3 can be implemented as a control method to be performed by the computer of the client 121 executing a computer program, for example.

In the present embodiment, an example in which voice recognition processing is performed by the server 120 will be described. Processes by the dialog management section 104, the response sentence generation section 105, the voice synthesis section 106, and the control signal generation section 107 to be executed after voice recognition may be executed by the client 121 instead of the server 120.

Fig. 3 shows a sequence of communication processing between the server 120 and the client 121. The sequence is started when a user designates a part on the display screen with the input apparatus 108, such as a remote control.

In input apparatus information acquisition processing in step S200, the selection condition detection section 109 acquires information indicating a location on the display screen which is designated by the input apparatus 108. If the input apparatus 108 is a touch panel, location designation can be performed through a touch with a finger or the like. If the input apparatus 108 is a remote control, the location designation can be performed through a button operation.

In selection condition detection processing in step S201, the selection condition detection section 109 detects whether one program is selected. The detection is performed by judging, on the basis of the location information acquired in the input apparatus information acquisition processing, whether the location designated by the input apparatus 108 corresponds to the location of an item indicating a program.

In selected information saving processing in step S202, the client 121 performs a process of acquiring information on an item selected by the input apparatus 108 (hereinafter may also referred to as "selected information") and saving the information on a recording medium, such as a memory. For example, if the selected item is a program, information associated with the selected program (for example, information, such as a program title, an air date, a summary, a cast, and the like) is acquired. Note that, in an example in which a map is displayed on a display, like the example to be described later, information related to a selected item can be information on a building at a designated location. The case of a map will be described later.

In selection condition transmission processing in step S203, information indicating the presence or absence of program selection by the input apparatus 108 which is acquired in the selection condition detection processing is transmitted from the communication circuit 113b of the client 121 to the communication circuit 113a of the server 120.

In selection condition reception processing in step S204, the communication circuit 113a of the server 120 receives the information indicating a selection condition transmitted from the client 121.

In selection condition management processing in step S205, the selection condition management section 110 manages a program selection condition on the basis of the information received in the selection condition reception processing. More specifically, the selection condition management section 110 saves, in the specific memory in the server 120, information of 1 indicating a state in which a program is selected or 0 indicating a state in which no program is selected. This allows implementation of management of the presence or absence of program selection.

Steps S200 to S205 described above are executed every time a current program selection is changed by a user. Thus, steps S200 to S205 shown in Fig. 3 can be executed a plurality of times.

In voice request transmission processing in step S206, the communication circuit 113a in the server 120 transmits a signal requesting transmission of a voice signal to the communication circuit 113b in the client 121. The processing is performed, for example, in response to a request to start giving a voice instruction from a user. The request to start giving a voice instruction can be triggered by, for example, pressing a start button displayed on the screen.

In voice request reception processing in step S207, the client 121 permits input of a voice from the microphone 101 associated with the client 121.

In A/D conversion processing in step S208, the client 121 performs A/D conversion (analog-to-digital conversion) on an input voice signal. With this A/D conversion, an analog voice is converted into a digital voice signal.

In voice signal transmission processing in step S209, the communication circuit 113b of the client 121 transmits the digital voice signal to the server 120.

In step S210, the communication circuit 113a of the server 120 receives the voice signal transmitted from the client 121.

In step S211, the voice recognition section 102 performs voice recognition processing. The voice recognition processing is a process of analyzing an input voice signal and converting the input voice signal into text data.

In step S212, the demonstrative character string detection section 103 detects a demonstrative character string. Demonstrative character string detection processing is a process of detecting a demonstrative character string by analyzing text data generated in the voice recognition processing.

In selection condition judgment processing in step S213, the selection condition management section 110 judges whether one item is selected, by referring to the selection condition information saved in the memory in the selection condition management processing in step S205. That is, the selection condition management section 110 judges, only on the basis of data on the server 120, whether the client 121 is in a selected state. If the client 121 is judged to be in a selected state, the server 120 requests selected information from the client 121. Upon receipt of the request, the client 121 transmits the selected information saved in the memory in the selected information saving processing in step S202, in selected information transmission processing in step S214.

In selected information reception processing in step S215, the communication circuit 113a of the server 120 receives the selected information from the communication circuit 113b of the client 121.

In dialog management processing in step S216, the dialog management section 104 determines a device control method and a voice response method on the basis of the received selected information and a result of the demonstrative character string detection processing and outputs information for replying to the client 121. The dialog management processing can be, for example, a process of determining a response method by the dialog management section 104 through referring to a table having input voice information and output information associated with each other. For example, upon receipt of an input voice saying "Power on the TV", the dialog management section 104 outputs a device control signal for powering on a TV or an identifier (ID) corresponding to a device control signal. If a user says, "Display details of the program", the characters "the" are detected from the demonstrative character string detection result. It is clear from the detection that the word "the" refers to the selected information acquired in the selected information reception processing in step S215. As a result, the dialog management section 104 can identify program details from program information obtained from the selected information and generate information for replying to the client 121.

In response result transmission processing in step S217, the communication circuit 113a of the server 120 transmits the information generated in the dialog management processing in step S216 to the client 121. The transmitted information can be, for example, a device control signal or an ID corresponding to a control signal, or synthesized voice data or text data from which a voice is to be synthesized.

In response result reception processing in step S218, the communication circuit 113b of the client 121 receives a response result from the server 120.

In response result output processing in step S219, the output circuit 112 outputs a device control signal, a synthesized voice, text, or the like received in the response result reception processing in step S218 to a user or a device as a control object through device output means. For example, as for a device control signal, it is conceivable to control power-on or power-off of a TV, increase or decrease of the volume, or increase or decrease of the channel number, as the response result output processing. As for a synthesized voice, it is conceivable to output a response voice through a TV speaker. As for text, a device of the client 121 may synthesize a voice and output the synthesized voice or may display processed text on a TV screen.

The program information presentation method using a voice recognition function will be described below in further detail as separate processes in the server 120 and in the client 121.

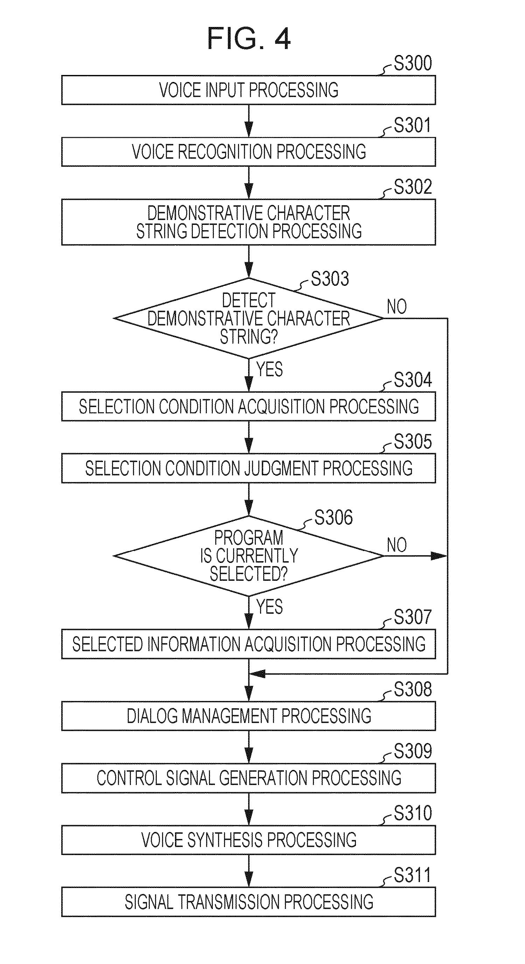

Fig. 4 shows the details of a processing flow after the server 120 receives a voice instruction.

First, in voice input processing (S300), a voice signal is input from the microphone 101. In the present embodiment, the microphone is provided in the client 121. A voice signal having undergone A/D conversion on the client 121 is transferred to the server 120 side.

In voice recognition processing (S301), the voice recognition section 102 performs recognition processing on the input voice signal. In the voice recognition processing, the input voice signal is converted into character string data. The voice recognition on the server 120 allows use of an acoustic model and a language model which are constructed from a large group of data. The computing power of the server 120 is higher than that of the client 121. Since the acoustic model and the language model learned from a large group of data through a statistical learning technique can be used, the method that performs voice recognition on the server 120 has the advantage of the high rate of recognition of various words. Along with the spread of smartphones, FTTH, and the like, environments in which terminals are connected to networks at all times have been developed. For this reason, the method that performs voice recognition on the server 120 is practical.

In demonstrative character string detection processing (S302), the demonstrative character string detection section 103 detects a demonstrative character string from a character string obtained through the voice recognition. The term demonstrative character string here refers to a demonstrative term or a demonstrative, such as "this", "it", "that", "the", "hereof", "its", or "thereof". The demonstrative character string detection is performed in the manner below. The demonstrative character string detection section 103 first divides the input character string into words or parts of speech through morphological analysis. A morpheme is the smallest meaningful unit among sentence elements. Through morphological analysis, a sentence can be divided into a plurality of morphemes, such as a word or a part of speech. A list of demonstrative character strings is prepared in advance, and if a word included in the list matches a divided morpheme, it is judged that a demonstrative character string in a sentence is detected. As described above, the process of detecting whether a demonstrative character string is detected is performed through matching of words.

The server 120 performs subsequent processing differently depending on whether a demonstrative character string is detected (S303). If a demonstrative character string is detected, the selection condition management section 110 acquires a condition indicating whether the input apparatus 108 on the client side is selecting information related to a program on a TV screen (S304). The selection condition management section 110 judges on the basis of the acquired selection condition whether the client 121 is in a program-selected state (S305). More specifically, assuming that 1 is designated as the selection condition when the input apparatus 108 is selecting a program on the screen and that something other than 1 is designated as the selection condition when the input apparatus 108 is selecting no program, the selection condition management section 110 acquires information of 1 or other than 1 in selection condition acquisition processing (S304). The selection condition management section 110 judges whether the client 121 is in a selected state, that is, whether the selection condition is 1, in selection condition judgment processing (S305). The value of 1 or other than 1 is saved in the selection condition management section 110. Subsequent processing depends on a result of the judgment, that is, whether a program is selected (S306).

If it is judged that a program is selected, the selection condition management section 110 acquires information related to the program selected on the screen (for example, a program title, an air date, a recording date, a genre, a broadcasting station, a program description, and EPG information) through selected information acquisition processing (S307). The information that the server 120 acquires from the client 121 is to perform a detailed operation related to the program. For example, detailed information on the program is transmitted from the client 121 to the server 120 such that the server can respond to an input order for an operation, such as display of a program description or display of a program genre.

If it is judged in the demonstrative character string detection judgment (S303) that a demonstrative character string is detected or if it is judged in the program selection judgment (S306) that no program is selected, the dialog management section 104 performs dialog management processing (S308). In the dialog management processing according to the present embodiment, the dialog management section 104 understands the meaning of the character string obtained through the voice recognition, determines what response to make in consideration of input language information, the context, and the like, and outputs information indicating a response result. In the case of, for example, making a response related to device control, such as making settings for recording a TV program or TV screen control, control signal generation processing (S309) generates a device control signal in accordance with an instruction from the dialog management section 104, thereby performing device control of the client 121. In the case of responding to a user by voice, the voice synthesis section 106 generates a synthesized voice in accordance with an instruction from the dialog management section 104 and outputs a voice signal in voice synthesis processing (S310).

In signal transmission processing (S311), the communication circuit 113a transmits a device control signal or a voice synthesized signal generated in the control signal generation processing and the voice synthesis processing to the communication circuit 113b of the client 121.

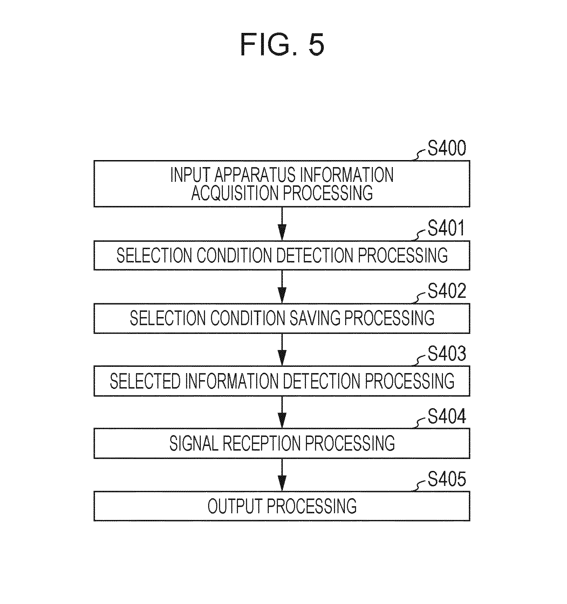

Fig. 5 shows a processing flow of a part related to selection condition detection and output of processing to be executed by the client 121.

Input apparatus information acquisition processing (S400) is a process by the input apparatus 108 of acquiring information. The input apparatus 108 acquires location information of a program selected by a user. In selection condition detection processing (S401), the selection condition detection section 109 detects whether the input apparatus 108 is selecting a program. The phrase "the input apparatus 108 is selecting a program" means that the client 121 has transited to a program-selected state by the user through designating the program with a cross key and pressing an enter button, for example, if the input apparatus 108 is a remote control. The client 121 may be provided with no enter button and be configured to transit to a program-selected state by simply designating a program with the cross key. If the input apparatus 108 is a touch screen or a display connected to a PC, the client 121 may be configured to transit to a state in which a specific program is selected by the user through tapping or clicking a spot where the program is displayed. A program can be deselected by the user through, for example, pressing again an enter button while the program is selected. That is, the input apparatus information acquisition processing allows the user to know which location is designated by the input apparatus, and the selection condition detection processing allows the user to know what information at the location is selected.

In selection condition saving processing (S402), the client 121 performs a process of saving the location information acquired in the input apparatus information acquisition processing and the information indicating whether a program is currently selected acquired in the selection condition detection processing. In selected information detection processing (S403), the selected information detection section 111 detects program information or program-related information corresponding to the location information saved in the selection condition saving processing. The term "program-related information" in the present specification refers to, for example, metadata related to a television program or content of a television program. Metadata includes, for example, at least one of the title of a television program, an air date, a genre, a broadcasting station, a channel name, the description of the television program, the rating of the television program, the recommendation degree of the television program, a cast, and a commercial sponsor. A recording date may be included in metadata. Content of a television program includes information indicating at least one of a person, an animal, a car, a map, a character, and a numeral. Note that the above-described examples are merely illustrative and that the present embodiment is not limited to these. Methods for detecting program information include the process of searching for information related to a program title in EPGs within and without the system and the process of conducting a Web search based on a program title and the like to acquire associated information.

In signal reception processing (S404), the communication circuit 113b of the client 121 receives a device control signal and a synthesized voice signal transmitted from the server 120 in the server signal transmission processing.

In output processing (S405), the output circuit 112 outputs a processing result to the user on the basis of a result of the control signal generation processing (S306) and a result of the voice synthesis processing (S307) received in the signal reception processing.

Note that an object to be designated by the input apparatus 108 is not limited to an icon or a list representing a program or the like. For example, an arbitrary location on a map or the like may be designated by a mouse. For designation on a map, x and y coordinates on the screen may be used as location information or coordinates may be represented by longitude and latitude information specific to a map. Longitude and latitude values can be associated with an address. For this reason, longitude and latitude information may be input as numerical values through a keyboard to designate an address. Alternatively, an address itself may be input through a keyboard. An address is a relatively long character string, and voice recognition of an address is considered likely to fail. In such a case, a user may designate an object to be pointed to by an input method easy for the user.

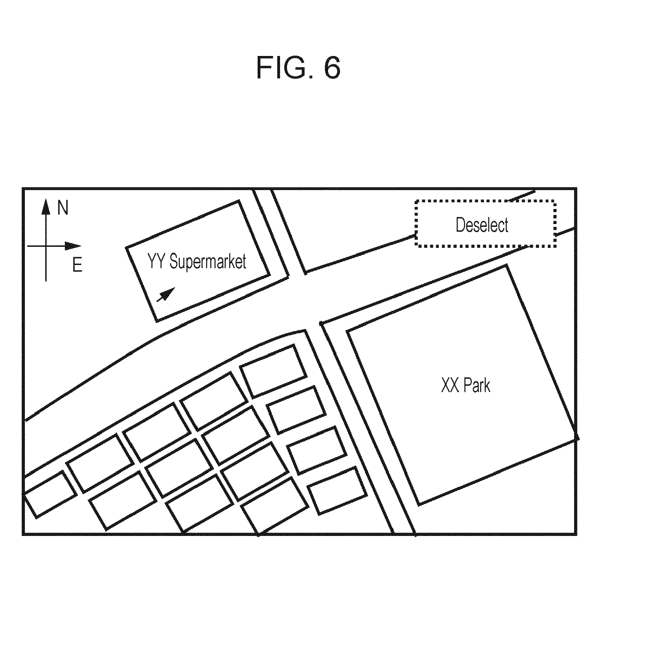

Note that a button or an icon for cancelling location designation may be provided at a location other than an object, a location of which is designated. In the case of program selection, selection and deselection of a program can be easily performed by repeatedly selecting an icon related to the program. However, if a specific location on a map is designated, it is difficult to deselect the location by selecting one point on the map. Thus, a deselect button may be provided at an upper portion of a map screen, as shown in Fig. 6. Deselection can be performed by pressing the deselect button, which facilitates deselection. Fig. 6 shows an example in which "YY Supermarket" is designated. An arrow representing a cursor is displayed at a designated location. In Fig. 6, deselection is performed by selecting the deselect button in the upper right of the map.

A display device which displays the above-described map may be used in a car navigation system, in addition to an information device, such as a television, a personal computer, a smartphone, or a tablet. A user can obtain desired information by designating (that is, selecting) an arbitrary spot and then giving a voice instruction including a demonstrative term referring to the spot. A system which presents requested information in response to a voice instruction, such as "What is the route to here?" or "Where is the nearest gas station from here?", can be constructed.

Note that information indicating that a program is selected may be accompanied with a time when the program is selected and be stored in the selection condition detection section 109. In this case, it is possible to associate a case where an absolute difference t between a time when a program is selected and a current time is smaller than a predetermined threshold and a case where the absolute difference t is larger with different demonstrative terms. For example, a program may be designated with a demonstrative term called a proximal demonstrative or a mesioproximal demonstrative, such as "this", "the", "here", or "it", if the absolute difference t is smaller than the predetermined threshold and may be designated with a demonstrative term called a distal demonstrative, such as "there" or "that", if the absolute difference t is larger than the predetermined threshold. As described above, a term for designation may be changed depending on the magnitude of the absolute difference t.

In the present embodiment, a specific program is selected using a demonstrative pronoun. When two or more programs are designated, which one of the programs a demonstrative pronoun refers to may be unclear. In this case, a program designated first may be selected using a proximal or mesioproximal demonstrative term as in "this program" or "the program", and a program designated later may be selected using a distal demonstrative term as in "that program". One can be selected from among a plurality of candidates by using different demonstrative pronouns.

At the time of designating a program using a demonstrative pronoun, personal identification information which is obtained through utilization of a personal recognition section (not shown) may be used. For example, when a program is selected by the input apparatus 108, who has selected the program may be identified, and personal identification information of the selector may be saved in the selection condition detection section 109 (the information is referred to as a piece of personal identification information A). At this time, the personal identification information and information on which program the person has selected are stored as a pair. When a demonstrative character string is detected by the demonstrative character string detection section 103, a person who has uttered the demonstrative character string may be identified (the identification information is referred to as a piece of personal identification information B). Searching for a piece of personal identification information A matching a piece of personal identification information B in information held by the selection condition detection section 109 allows judgment as to whether a person who is the selector of a program matches a person who is the utterer of a demonstrative character string. If a selector and an utterer match, a program stored and paired with the piece of personal identification information A of the selector is regarded as a program referred to by a demonstrative pronoun and is intended as an operation object.

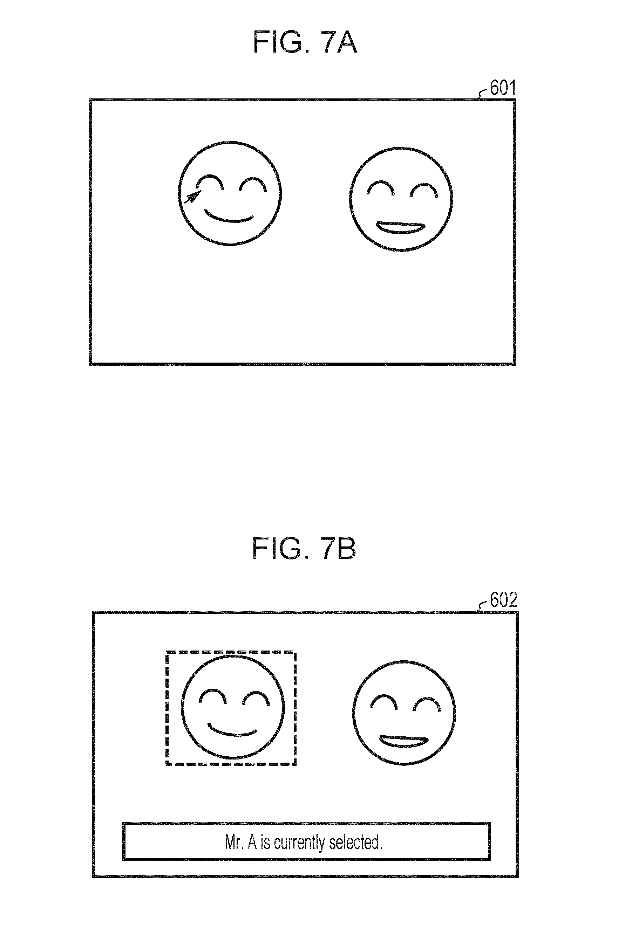

Note that if a touch pad mounted on a remote control, a joystick, or the like is used such that an arbitrary place on the screen can be designated, any place one wants on the screen can be designated. This allows display of a list of programs, in which a specific person on the screen designated by a cursor appears, on the screen, for example, when a user designates the person with the cursor and says for designation purpose, "Programs in which the person appears". If there is only one person on the screen, who "the person" refers to can be known only from the voice. However, if there are two or more persons, as in Fig. 7A, it is difficult to designate a person only by voice. Selection of one of a plurality of persons appearing in a TV program, which is difficult to achieve only by voice, can be performed by using a cursor, as shown in Fig. 7B. This allows an information search specific to a selected person. To recognize who a person pointed to by a cursor is, an existing face detection technique and face recognition technique can be used. A screen example 601 in Fig. 7A is an example in which a person on the screen is pointed to by a cursor. In the screen example 601, the cursor is pointed to a person on the left side. If the person is designated by the cursor, face detection and face recognition processing is performed around the cursor. After that, the identity of the recognized person is displayed on a display, as shown in Fig. 7B, or is presented to a user by voice, which allows the user to visually confirm who is designated (a screen example 602).

Note that although an example of person detection has been described in this example, it is also possible to recognize an animal, a car, a character, a numeral, and the like, as described above, by use of a general object recognition technique.

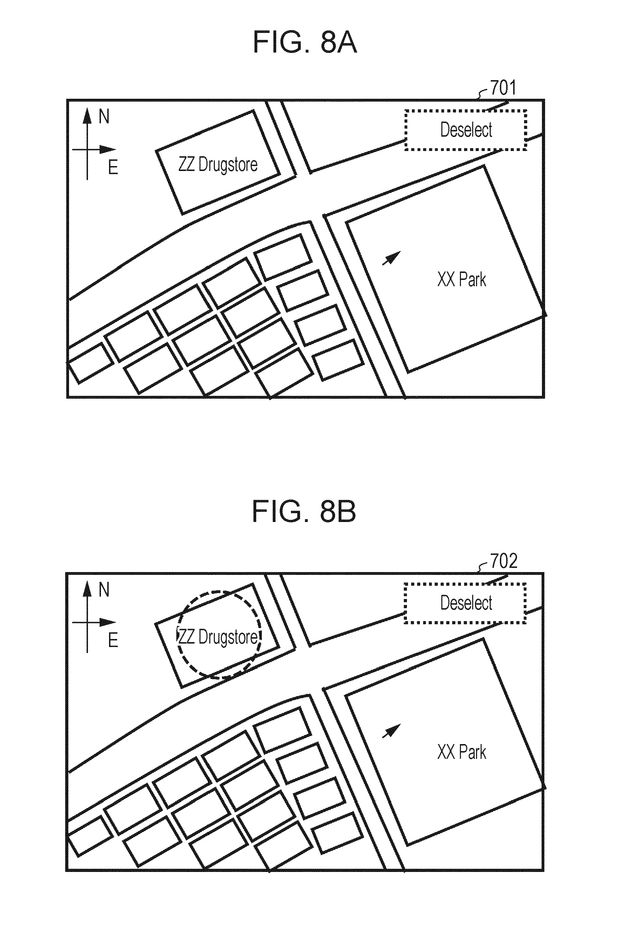

In the case of searching for a place using a map displayed on the screen, a map of a specific region is displayed on the display screen, and a search based on arbitrary coordinates on the map or an object on the map designated by a cursor can be performed. For example, if a user says, "A drugstore on the north of this place", a drugstore on the north of the location of the cursor can be displayed, as shown in Figs. 8A and 8B. In a display example 701 in Fig. 8A, XX Park is designated, and the designation is indicated by an arrow in Fig. 8A. By conducting a voice-based search, the place of a drugstore is presented, as in a display example 702 in Fig. 8B. In the display example 702, the retrieved location is indicated by a dotted circle. This allows a user to conduct an intuitive map search based on voice and information on a currently pointed-to location without knowing a detailed address. Similarly, it is possible to search for how to get from a current location to the location pointed to by the cursor (perform a public transport route search or car navigation) by asking the question, "How to get there?". In contrast to a normal method which needs button operations in several steps to conduct a search for how to get to a location after confirming the location on a map, processing can be quickly completed through voice input, and settings are simple and easy.

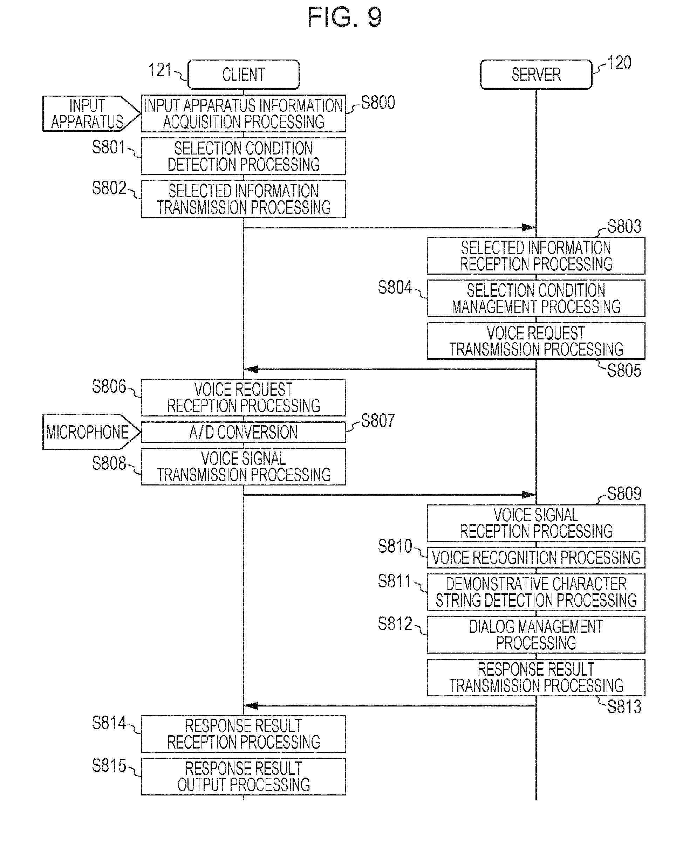

Note that although transmission and reception processing of a selection condition and transmission and reception processing of selected information have been separately described in the present embodiment, selected information may also be transmitted at the time of transmission of a selection condition. In this case, a sequence of data transmission and reception between the server and the client is as shown in Fig. 9. The configuration of the system and processing flows of the server and the client are as shown in Figs. 2, 4, and 5. A redundant description may be omitted below.

Fig. 9 shows a sequence of communication processing between the server 120 and the client 121 in a case where selected information is also transmitted at the time of transmission of a selection condition. The sequence is started when a user designates a part on the display screen with the input apparatus 108, such as a remote control.

Step S800 is input apparatus information acquisition processing. The selection condition detection section 109 detects where the input apparatus 108 points on the screen of the client 121.

Step S801 is selection condition detection processing. The selection condition detection section 109 acquires whether the location designated in the input apparatus information acquisition processing indicates that an item is designated by the input apparatus 108.

Step S802 is selected information transmission processing. The communication circuit 113b transmits information related to a selected item to the server 120.

Step S803 is selected information reception processing. The communication circuit 113a of the server 120 receives the selected information from the client 121.

Step S804 is selection condition management processing. This is processing for the selection condition management section 110 to manage the selection condition obtained via the input apparatus 108 that is received in the selection condition reception processing on the server 120 side. In the selection condition management processing, the selection condition management section 110 regards a state in which the input apparatus 108 is selecting a specific item as 1 and a state in which no item is selected as 0 and saves information of 0 or 1 in the specific memory on the server 120. In this example, since the selected information has been already transmitted, what information has been transmitted is also saved in the memory. For example, a program title, an air date, a description, and the like are saved in the case of a list of television programs, and a place name, longitude and latitude, housing information for a selected place, and the like are saved in the case of a map.

Step S805 is voice request transmission processing. The server 120 transmits, to the client 121, a signal requesting transmission of a voice signal.

Step S806 is voice request reception processing. Upon acceptance of the voice request reception processing, the client 121 permits input of a voice from the microphone 101 associated with the client 121.

In step S807, the client 121 permits input of a voice and performs A/D conversion (analog-to-digital conversion). With this A/D conversion, an analog voice is converted into a digital voice signal. In voice signal transmission processing in step S808, the communication circuit 113b of the client 121 transmits the digital voice signal to the server 120.

In step S809, the communication circuit 113a of the server 120 receives the voice signal transmitted from the client 121.

In step S810, the voice recognition section 102 performs voice recognition processing. In step S811, the demonstrative character string detection section 103 detects a demonstrative character string.

Step S812 is dialog management processing. The dialog management section 104 outputs a device control method, a voice response method, or the like from the received selected information and a result of the demonstrative character string detection processing. A method for the dialog management processing is the same as that described earlier.

Step S813 is response result transmission processing. The response result transmission processing is a process of transmitting, to the client 121, a control signal, an ID corresponding to a control signal, a synthesized voice, or text from which a voice is to be synthesized, which is output through the dialog management processing.

Step S814 is response result reception processing. With this processing, the communication circuit 113b of the client 121 receives a response result from the server 120.

Step S815 is response result output processing. As the response result output processing, the output circuit 112 outputs a device control signal, a synthesized voice, text, or the like received in the response result reception processing to a user terminal or a device as a control object through device output means.

With the above-described configuration and processing, it is possible to reduce processing delays even in a case where voice recognition processing is performed on a server.

### (Second Embodiment)

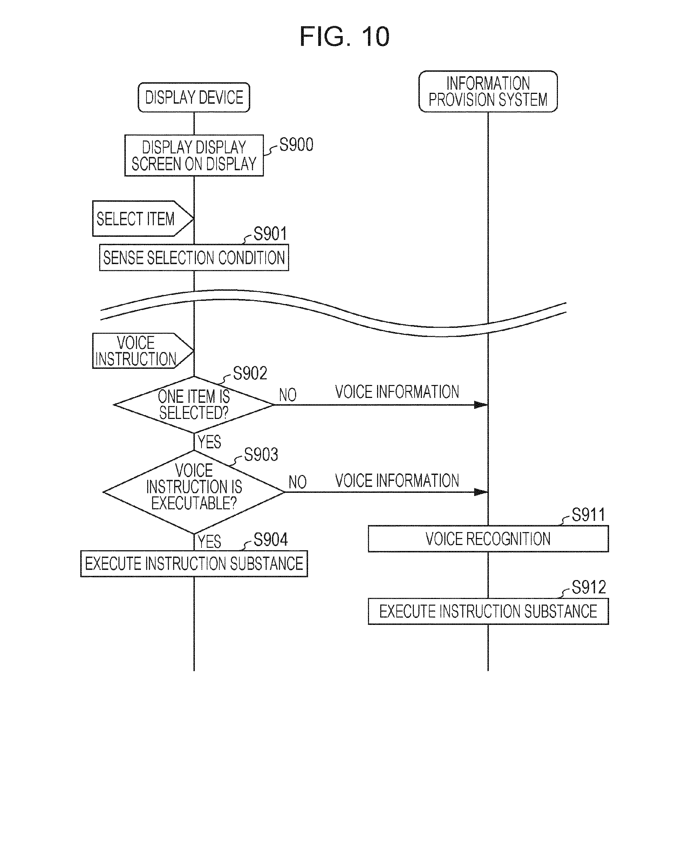

Fig. 10 is a sequence chart showing the summary of a control method to be executed on a display device by an information provision system according to the present embodiment. The information provision system according to the present embodiment is different from the first embodiment in that a display device also has a voice recognition function. The present embodiment will be described below with a focus on differences from the first embodiment, and a description of a redundant matter may be omitted.

The control method for a display device according to the present embodiment causes a computer of a display device to execute processing shown in Fig. 10. The control method first causes the computer to display a display screen including a plurality of selectable items on a display which is mounted on or connected to the display device (step S900). The control method then causes the computer to sense that one item of the plurality of items is selected on the display screen of the display (step S901). Steps S900 and S901 are repeatedly executed every time a current item selection is changed.

When the display device accepts a voice instruction, the display device judges whether one item is selected (step S902). If no item is selected, the display device transmits accepted voice information to a different computer (hereinafter referred to as a "server") in the information provision system. If an item is selected, the display device judges whether the voice instruction is executable (step S903). If the voice instruction is executable, the display device executes instruction substance (step S904). On the other hand, if the voice instruction is inexecutable, the display device transmits voice information to the server. The server recognizes and executes the voice instruction that cannot be executed by the display device (steps S911 and S912).

An executable voice instruction here refers to a voice instruction which can be processed within a function programmed in advance in the display device. For example, if the display device can accurately recognize a voice instruction which is a combination of a specific demonstrative term and specific instruction substance but cannot recognize any other voice instruction (for example, an instruction for a Web search), the former one is executable, and the latter one is inexecutable. The server executes the latter voice instruction on behalf of the display device and returns a response result to the display device.

As described above, if a voice instruction including first voice information representing instruction substance is received from a voice input apparatus when selection of one item is sensed, the control method according to the present embodiment causes the computer of the display device to recognize the instruction substance from the first voice information and execute the instruction substance. If selection of one item is not sensed or if the instruction substance is judged to be inexecutable, the control method causes the computer to transmit the voice instruction to the server. Since access between the display device and the server occurs only when necessary, processing delays can be reduced.

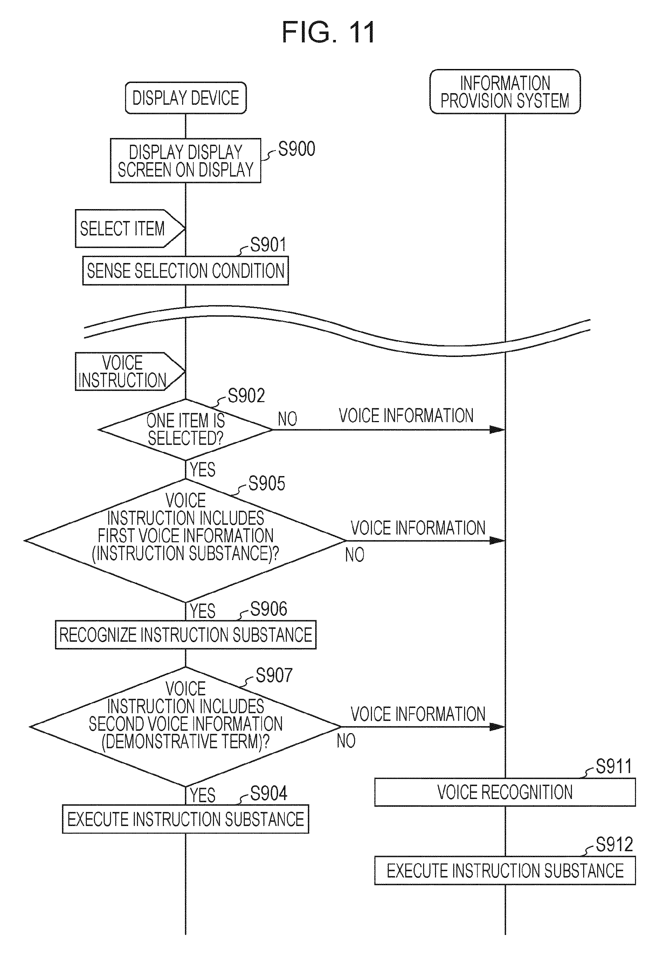

Fig. 11 is a sequence chart showing an example of a control method for a display device capable of recognizing a voice instruction which is a combination of a demonstrative term and instruction substance. In the control method, steps S905 to S907 are executed instead of step S903 in Fig. 10. Except for this point, the method is the same as the method in Fig. 10. In step S905, the display device judges whether a voice instruction includes first voice information representing instruction substance. If the judgment gives a negative result, the display device transmits voice information to the server. On the other hand, if the judgment gives a positive result, the display device recognizes the instruction substance (step S906). In succeeding step S907, the display device judges whether the voice instruction includes second voice information indicating a demonstrative term. If the judgment gives a negative result, the display device transmits voice information to the server. On the other hand, if the judgment gives a positive result, the display device executes the instruction substance (step S904).

As described above, if selection of one item is sensed, the instruction substance is recognized from the first voice information, and the voice instruction is judged to include the second voice information, the control method shown in Fig. 11 causes the computer of the display device to execute the instruction substance. On the other hand, if selection of one item is not sensed, if instruction substance is not recognized from the first voice information, or if the voice instruction is not judged to include the second voice information, the control method causes the computer to transmit the voice instruction to the server. Since access between the display device and the server occurs only when necessary, processing delays can be reduced.

A more specific example of a system adopting a program information presentation method according to the present embodiment will be described.

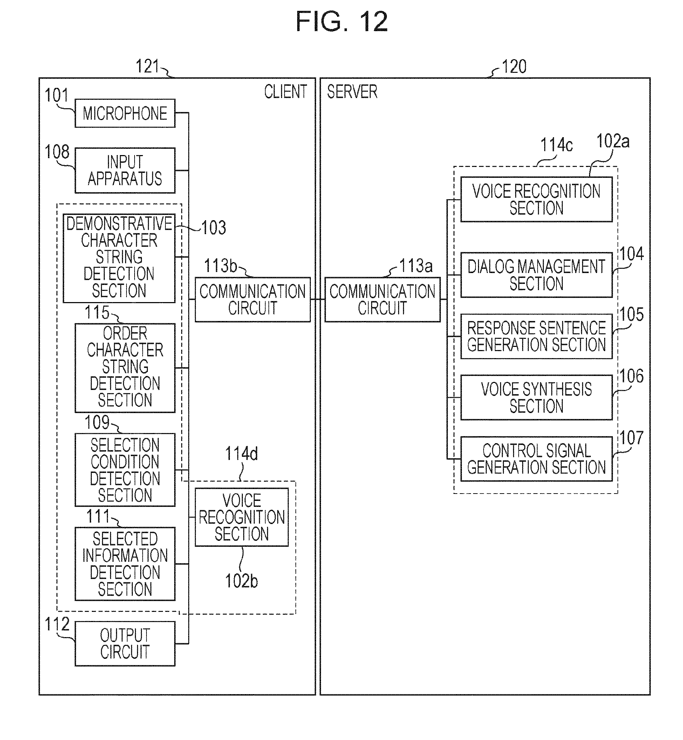

Fig. 12 shows the configuration of the system adopting the program information presentation method according to the present embodiment. The program information presentation method presents information on a program to a user by using a voice recognition function of recognizing a voice of a user. The present system includes a client 121 and a server 120. The client 121 corresponds to the display device described earlier or a different device connected to the display device. The client 121 can be a device, such as a television, a recorder, a smartphone, or a tablet. In the example in Fig. 12, the client 121 includes a microphone 101 as a voice input apparatus, an input apparatus 108, an output circuit 112, a communication circuit 113b, and a control circuit 114d which controls the components. The control circuit 114d according to the present embodiment is different from the control circuit 114b shown in Fig. 2 in that the control circuit 114d has a voice recognition section 102b, a demonstrative character string detection section 103, and an order character string detection section 115, in addition to a selection condition detection section 109 and a selected information detection section 111.

The server 120 includes a communication circuit 113a which communicates with the client 121 and a control circuit 114c. The control circuit 114c has five functional sections, a voice recognition section 102a, a dialog management section 104, a response sentence generation section 105, a voice synthesis section 106, and a control signal generation section 107.

In the present embodiment, the microphone 101 as the voice input apparatus senses a voice signal from a user. The voice recognition section 102b converts the sensed voice signal into a character string. The demonstrative character string detection section 103 judges whether the character string obtained through the conversion includes a demonstrative pronoun. The order character string detection section 115 detects whether the character string obtained through the conversion includes an order character string for device control or the like. The input apparatus 108 allows a user to select one program when a plurality of pieces of program information are displayed on a display.

When a program is selected by the input apparatus 108, information on a selected location on a screen is input to the system. The selection condition detection section 109 judges whether any program is selected by the input apparatus 108. The selected information detection section 111 detects location information of the program selected by the input apparatus 108, information related to the selected program, and the like. The output circuit 112 performs output processing, such as display of a response sentence to the display, playback of a synthesized voice with a speaker, device control based on a generated control signal, and display of a control result on the display, in response to output results from the response sentence generation section 105, the voice synthesis section 106, and the control signal generation section 107.

The communication circuits 113a and 113b each include a communication module for communication between the server 120 and the client 121. The communication module performs communication using an existing communication scheme, such as Wi-Fi® or Bluetooth®, as described earlier. The communication module may be of any type as long as the communication module has the above-described function. A voice signal obtained through synthesis in the voice synthesis section 106 and a control signal for device control are transmitted to the output circuit 112. The output circuit 112 outputs a voice signal, a signal for device control, and information indicating a control result.

The voice recognition section 102a performs voice recognition on the server 120. The dialog management section 104 manages a history of interactive processing between a user and the device, a response strategy regarding what dialog processing is to be performed, and the like. The response sentence generation section 105 generates a character string for a response to a user in accordance with an input character string. The voice synthesis section 106 converts the character string generated by the response sentence generation section 105 into a voice. The control signal generation section 107 generates a device control command corresponding to the content of a dialog.

The above-described constituent elements of the control circuit 114c in the server 120 and the control circuit 114d in the client 121 may be implemented by a computer (for example, a CPU) of the server 120 through executing a computer program or may be provided as separate, independent circuits or the like.

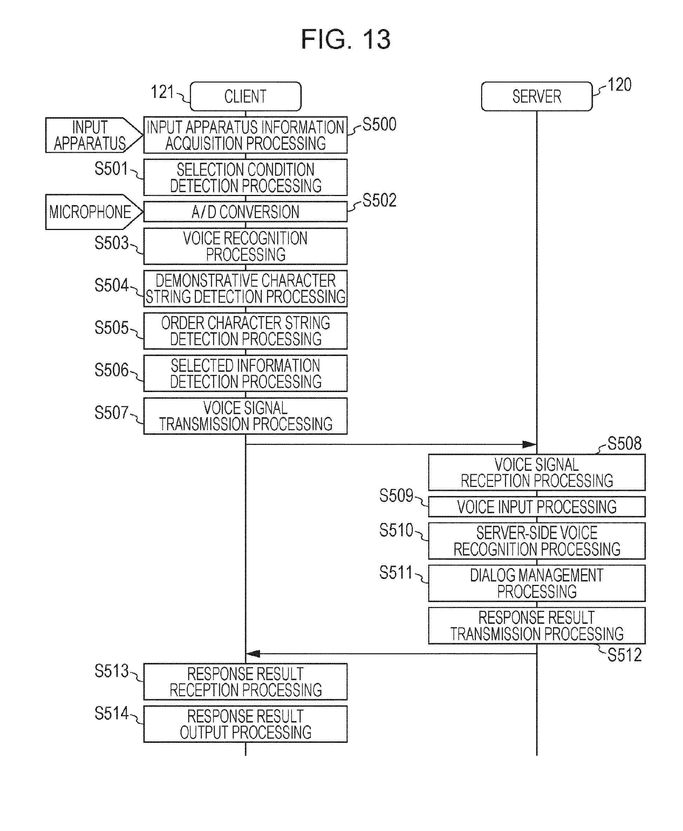

For example, processes to be described later by the server 120 shown in Fig. 13 can be implemented as a control method to be performed by the computer of the server 120 executing a computer program. Similarly, processes by the client 121 shown in Fig. 13 can be implemented as a control method to be performed by the computer of the client 121 executing a computer program.

The present embodiment is different from the related art and the first embodiment in that the client 121 and the server 120 both perform voice recognition processing. Not the server 120 but the client 121 may include the dialog management section 104 and the response sentence generation section 105 that execute processing after voice recognition or the voice synthesis section 106 and the control signal generation section 107 that generate a processing result.

Fig. 13 shows a sequence of communication processing between the server 120 and the client 121. The sequence is started when a user designates a part on the display screen with the input apparatus 108, such as a remote control.

Step S500 is input apparatus information acquisition processing. The selection condition detection section 109 acquires information indicating a location on the display screen which is designated by the input apparatus 108.

Step S501 is selection condition detection processing. The selection condition detection section 109 detects whether one program is selected. The detection is performed by judging, on the basis of the location information acquired in the input apparatus information acquisition processing, whether the location designated by the input apparatus 108 corresponds to the location of an item indicating a program.

In step S502, the client 121 receives a voice and performs A/D conversion (analog-to-digital conversion). With this A/D conversion, an analog voice is converted into a digital voice signal.

Step S503 is voice recognition processing, in which the client 121 recognizes the input voice.

In step S504, the demonstrative character string detection section 103 performs demonstrative character string detection. In the demonstrative character string detection processing, a demonstrative character string is detected by analyzing text data obtained through the voice recognition processing.

In step S505, the order character string detection section 115 performs order character string detection. Order character string detection processing is a process of detecting an order character string by analyzing the text obtained through the voice recognition processing.

In step S506, the selected information detection section 111 performs selected information detection processing. The input apparatus 108 detects information corresponding to the location acquired in the information acquisition processing.

Step S507 is voice signal transmission processing. The communication circuit 113b of the client 121 transmits a voice signal to the server 120.

Step S508 is voice signal reception processing. The communication circuit 113a of the server 120 receives the voice signal.

Step S509 is voice input processing. The voice signal received by the communication circuit 113a is input into the server 120.

Step S510 is voice recognition processing on the server side. The voice recognition section 102a performs voice recognition processing on the server 120.

Step S511 is dialog management processing. The dialog management section 104 determines a device control method and a voice response method on the basis of received selected information and a result of the demonstrative character string detection processing and outputs information for replying to the client. A method for the dialog management processing is as described in the first embodiment.

Step S512 is response result transmission processing. The response result transmission processing transmits, to the client 121, a control signal, an ID corresponding to the control signal, a synthesized voice, or text from which a voice is to be synthesized, which is output through the dialog management processing.

Step S513 is response result reception processing. With this processing, the communication circuit 113b of the client 121 receives a response result from the server 120.

Step S514 is response result output processing. As the response result output processing, the output circuit 112 outputs a device control signal, a synthesized voice, text, or the like received in the response result reception processing to a user terminal or a device as a control object through device output means.

The program information presentation method using a voice recognition function will be described below in further detail as separate processes in the server 120 and in the client 121.

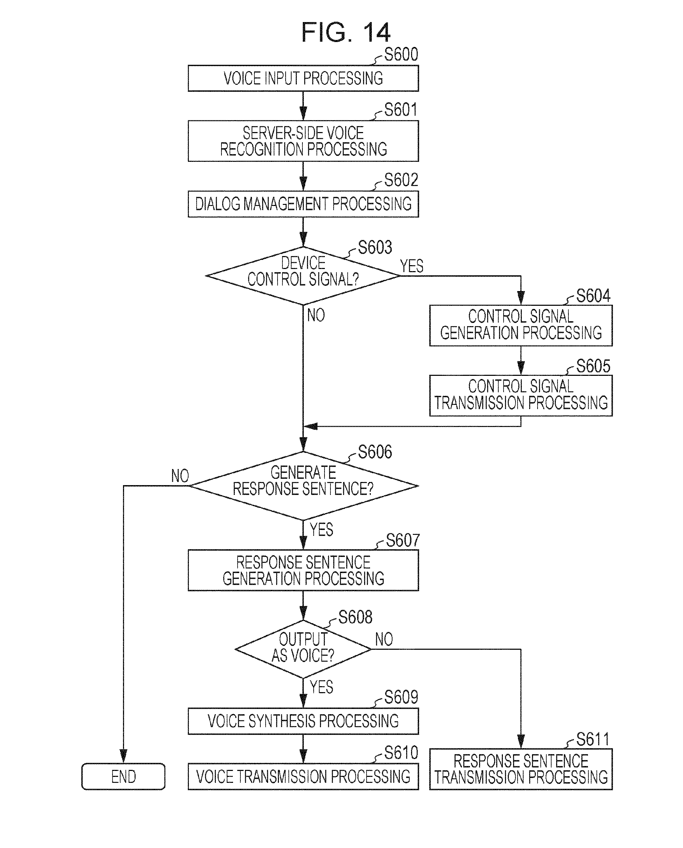

Fig. 14 shows a flow of processing related to the server 120 of the processing shown in Fig. 1.

First, in voice input processing (S600), a voice signal is input from the microphone 101. In the present embodiment, the microphone is provided in the client 121. A voice signal having undergone A/D conversion on the client 121 is transferred to the server 120 side.

In server-side voice recognition processing (S601), the voice recognition section 102a performs recognition processing on the input voice signal. In the voice recognition processing, the input voice signal is converted into character string data. The voice recognition on the server 120 allows use of an acoustic model and a language model which are constructed from a large group of data. The computing power of the server 120 is higher than that of the client 121. Since the acoustic model and the language model learned from a large group of data through a statistical learning technique can be used, the method that performs voice recognition on the server 120 has the advantage of the high rate of recognition of various words. Along with the spread of smartphones, FTTH, and the like, environments in which terminals are connected to networks at all times have been developed. For this reason, the method that performs voice recognition on the server 120 is practical.

In dialog management processing (S602), the dialog management section 104 understands the meaning of the character string obtained through the voice recognition and produces an output regarding what response to make in consideration of input language information, the context, and the like. Judgment processing (S603) as to whether to generate a control signal is performed on the basis of an output result from the dialog management processing. In the case of, for example, making a response related to device control, such as making settings for recording a TV program or TV screen control, the control signal generation section 107 generates a device control signal in control signal generation processing (S604). In control signal transmission processing (S605), the communication circuit 113a of the server 120 transmits the control signal generated in the control signal generation processing to the client 121. With this transmission, device control is performed on the client 121 side.

If a negative judgment is made in step S603 or after step S605 ends, whether to respond to a user by voice is judged (S606). In the case of responding to the user by voice, a response sentence is generated in response sentence generation processing (S607). It is then judged whether the response sentence is output as a voice or text (S608). If the response sentence is output as a voice, the voice synthesis section 106 generates a synthesized voice and outputs a voice signal in voice synthesis processing (S609). In voice transmission processing (S610), the communication circuit 113a of the server 120 transmits data which is converted from the text into a synthesized voice to the client 121.

If the response sentence is output as text, response sentence transmission processing (S611) is performed. The response sentence generation section 105 generates text through the response sentence generation processing, and a response sentence as the generated text is transmitted from the server 120 to the client 121.

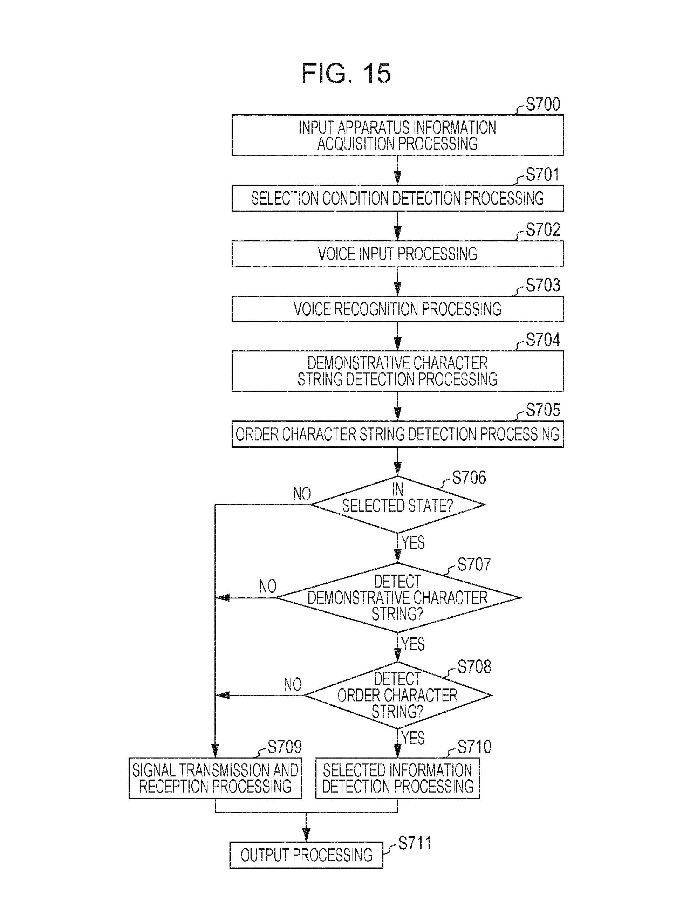

Fig. 15 shows a processing flow of a part related to selection condition detection and output of processing to be executed by the client 121.

Input apparatus information acquisition processing (S700) is a process by the input apparatus 108 of acquiring information. The input apparatus 108 acquires location information of a program selected by a user. In selection condition detection processing (S701), the selection condition detection section 109 detects whether the input apparatus 108 is selecting a program on a TV screen. The phrase "the input apparatus 108 is selecting a program" means that the client 121 has transited to a program-selected state by the user through designating the program with a cross key and pressing an enter button, for example, if the input apparatus 108 is a remote control. A program can be deselected by the user through pressing again an enter button while the program is selected. That is, the input apparatus information acquisition processing allows the user to know which location is designated by the input apparatus, and the selection condition detection processing allows the user to know what information at the location is selected.

In voice input processing (S702), the communication circuit 113a receives a voice transmitted from the client 121. In voice recognition processing (S703), the voice recognition section 102 recognizes the input voice. The voice recognition on the client 121 has a limitation in the number of registerable words, as compared to server-side voice recognition. To reduce misrecognition with limited computational complexity and memory, it is desirable to register minimal words in a dictionary. The dictionary may be stored in a memory (not shown) in a circuit which functions as the voice recognition section 102 or may be stored in a storage apparatus (not shown) which is provided in the client 121.

Examples of the minimal words include a collection of words associated with buttons of a remote control, such as "power-on", "power-off', "volume increase", and "volume decrease". Additionally, in the present embodiment, to perform demonstrative character string detection processing and order character string detection processing (to be described later), a vocabulary used for the detection is registered in advance in the dictionary. For example, to recognize a demonstrative character string, demonstrative terms or demonstratives, such as "this", "it", "that", "the", "hereof", "its", and "thereof", are registered. An order vocabulary including "display details", "search", and the like is also registered. With this registration, the voice recognition section 102 can recognize a phrase, such as "Display details of the program". As a result, a demonstrative character string and an order character string can be detected by subsequent processing.

In demonstrative character string detection processing (S704), the demonstrative character string detection section 103 detects a demonstrative character string from a character string which is obtained in the voice recognition. The term demonstrative character string refers to a demonstrative term or a demonstrative described earlier. The demonstrative character string detection is performed in the manner below. The demonstrative character string detection section 103 first divides the input character string into words or parts of speech through morphological analysis. A morpheme is the smallest meaningful unit among sentence elements. Through morphological analysis, a sentence can be divided into a plurality of morphemes, such as a word or a part of speech. A list of demonstrative character strings is prepared in advance, and if a word included in the list matches a divided morpheme, it is judged that a demonstrative character string in a sentence is detected.

In order character string detection processing (S705), the order character string detection section 115 detects an order character string from a result of the voice recognition. The order character string detection section 115 performs morphological analysis, as in the demonstrative character string detection processing, and divides a sentence. The order character string detection section 115 detects an order character string by comparing the divided sentence with a list of words registered in advance. Examples of an order character string registered in the word list here include words or phrases corresponding to operation commands, such as "display details", "search", and "record".

The selection condition detection section 109 judges using the information obtained through the selection condition detection processing whether an area on the screen is selected (S706). The selection condition detection section 109 outputs a flag indicating a program selection condition, for example, when a program on a TV screen is selected. At this time, the selection condition detection section 109 returns 1 when a program is selected and outputs something other than 1 when no program is selected. By use of the value, it is possible to know the program selection condition and perform condition judgment. The demonstrative character string detection section 103 and the order character string detection section 115 then make a judgment as to whether a demonstrative character string is detected (S707) and a judgment as to whether an order character string is detected (S708), respectively. To judge detection of these character strings, demonstrative character string detection is performed through matching with vocabularies of the lists registered in advance, as described earlier.

If it is judged by the selection condition detection section 109 that no item is selected, if no demonstrative character string is detected by the demonstrative character string detection section 103, or if no order character string is detected by the order character string detection section 115, signal transmission and reception processing (S709) is performed. In this processing, the communication circuit 113a transmits a voice signal to the server 120 and then receives a signal indicating a response result returned from the server 120. The signal indicating the response result includes a voice signal or a device control signal which is generated through voice recognition and dialog processing in the server 120. The output circuit 112 performs output processing (S711) and notifies the user of a processing result.

If the selection condition detection section 109 judges that the client 121 is in a selected state, and the demonstrative character string detection section 103 and the order character string detection section 115 detect a demonstrative character string and an order character string, in steps S706 to S708, selected information detection processing (S710) is performed. In the selected information detection processing (S710), the selected information detection section 111 acquires the location information acquired in the input apparatus information acquisition processing, information on a TV program, and the like. For example, the selected information detection section 111 acquires a location on a TV screen of a program designated on the screen with the input apparatus 108 and information related to the program, such as metadata related to a TV program or content of a TV program described earlier. The output circuit 112 performs the output processing (S711) on the basis of the acquired information and the order character string to control a device.

As has been described above, according to the present embodiment, a voice instruction is recognized not only on the server 120 but also on the client 121. The client 121 transmits a voice signal to the server 120 only if a voice instruction is inexecutable, passes processing to the server 120, and waits for a response result. With this configuration, processing, for which a few kinds of voice instructions are available, such as operation related to a TV program, can be executed on the client 121 side, and other processing can be executed on the server 120 side. According to the present embodiment, access between the client 121 and the server 120 can be minimally reduced, and processing delays can be reduced.

Note that the various modifications described in the first embodiment can also be applied to the present embodiment. The first embodiment and the second embodiment may be combined into a new embodiment.

Note that the microphone 101 as a voice input apparatus has been described as being provided in a client in the above-described embodiments. This configuration, however, is merely illustrative. For example, the microphone 101 may be present as a device separate from a client. It suffices for a client to be connected to the microphone 101 and be able to receive a voice input via the microphone 101.

If the microphone 101 is provided in a client, the microphone 101 is present as an independent apparatus inside the client 121 and is nothing more than being internally wired. The microphone 101 can be provided so as to be easily detachable. The microphone 101 is not a constituent element essential to the client 121. It suffices for the client 121 to be connected to the microphone 101 inside or outside the client 121.

In the above-described embodiments, the output circuit 112 has been described as outputting a device control signal, a synthesized voice, text, and the like. This means that the output circuit 112 can be a part of a control signal transmission section (for example, an output terminal or an infrared transmission apparatus of a remote control), a part of a voice output apparatus (for example, a speaker), and a part of a display. The components may be integrally provided or may be present as separate, independent devices.

The present disclosure relates to an information presentation method using a voice recognition function and is useful for voice recognition processing on a server.

## Claims

1. An information provision method in an information provision system connected to a display device having a display and a voice input apparatus capable of inputting a voice of a user for providing information via the display device in response to the voice of the user, comprising:
transmitting display screen information for displaying a display screen including a plurality of selectable items on the display of the display device to the display device;
receiving item selection information indicating that one item of the plurality of items is selected on the display screen of the display;
recognizing instruction substance from first voice information representing the instruction substance if a voice instruction including the first voice information is received from the voice input apparatus when the one item is selected;
judging whether the voice instruction includes second voice information indicating a demonstrative term; and
executing the instruction substance for the one item if the voice instruction is judged to include the second voice information.

2. The information provision method according to Claim 1, wherein the instruction substance is an instruction to search for information related to the one item, and the information provision method further includes notifying the user of a result of a search based on the instruction substance.

3. The information provision method according to Claim 2, further comprising:
transmitting search result information for displaying the result of the search on the display to the display device.

4. The information provision method according to Claim 2, wherein the information provision system is further connected to a voice output apparatus capable of outputting a voice, and the information provision method further includes transmitting search result information for outputting the result of the search as a voice from the voice output apparatus to the voice output apparatus.

5. The information provision method according to Claim 1, wherein the plurality of items are each an item which points to metadata related to a television program or content of a television program.

6. The information provision method according to Claim 5, wherein the metadata indicates at least one of a television program title, a channel name, a summary of the television program, an attention degree of the television program, and a recommendation degree of the television program.

7. The information provision method according to Claim 5, wherein the content of the television program includes information indicating at least one of a person, an animal, a car, a map, a character, and a numeral.

8. The information provision method according to Claim 1, wherein the display screen represents a map in a specific region, and the plurality of items are each arbitrary coordinates on the map or an object on the map.

9. The information provision method according to Claim 8, wherein the object indicates a building on the map.

10. The information provision method according to Claim 8, wherein the object indicates a road on the map.

11. The information provision method according to Claim 8, wherein the object indicates a place name on the map.

12. A control method for a display device connected to a voice input apparatus capable of inputting a voice of a user and having a display, the control method causing a computer of the display device to:
display a display screen including a plurality of selectable items on the display;
sense that one item of the plurality of items is selected on the display screen of the display;
recognize instruction substance from first voice information representing the instruction substance and execute the instruction substance if a voice instruction including the first voice information is received from the voice input apparatus when selection of the one item is sensed; and
transmit the voice instruction to a different computer if selection of the one item is not sensed or if the instruction substance is judged to be inexecutable.

13. The control method according to Claim 12, the control method further causing the computer of the display device to:
judge whether the voice instruction includes second voice information indicating a demonstrative term;
execute the instruction substance if selection of the one item is sensed, the instruction substance is recognized from the first voice information, and the voice instruction is judged to include the second voice information; and
transmit the voice instruction to the different computer if selection of the one item is not sensed, if the instruction substance is not recognized from the first voice information, or if the voice instruction is not judged to include the second voice information.

14. The control method according to Claim 12, wherein the instruction substance is an instruction to search for information related to the one item, and the control method further causes the computer of the display device to notify the user of a result of a search based on the instruction substance.

15. The control method according to Claim 14, wherein the display device is connected to a server via a network, and the control method further causes the computer of the display device to refer to a database in the server and to search for information related to the one item in the database.

16. The control method according to Claim 14, wherein the control method further causes the computer of the display device to display the result of the search on the display.

17. The control method according to Claim 12, wherein the voice input apparatus is included in the display device.

18. The control method according to Claim 14, wherein the display device is further connected to a voice output apparatus capable of outputting a voice, and the control method further causes the computer of the display device to transmit search result information for outputting the result of the search as a voice from the voice output apparatus to the voice output apparatus.

19. The control method according to Claim 18, wherein the voice output apparatus is included in the display device.

20. The control method according to Claim 12, wherein the plurality of items are each an item which points to metadata related to a television program or content of a television program.

21. The control method according to Claim 20, wherein the metadata indicates at least one of a television program title, a channel name, a summary of the television program, an attention degree of the television program, and a recommendation degree of the television program.

22. The control method according to Claim 20, wherein the content of the television program includes information indicating at least one of a person, an animal, a car, a map, a character, and a numeral.

23. The control method according to Claim 12, wherein the display screen represents a map in a specific region, and the plurality of items are each arbitrary coordinates on the map or an object on the map.

24. The control method according to Claim 23, wherein the object indicates a building on the map.

25. The control method according to Claim 23, wherein the object indicates a road on the map.

26. The control method according to Claim 23, wherein the object indicates a place name on the map.

27. A non-transitory recording medium storing a computer program to be executed by a display device connected to a voice input apparatus capable of inputting a voice of a user and having a display, the computer program causing a computer of the display device to:
display a display screen including a plurality of selectable items on the display;
sense that one item of the plurality of items is selected on the display screen of the display;
recognize instruction substance from first voice information representing the instruction substance and execute the instruction substance if a voice instruction including the first voice information is received from the voice input apparatus when selection of the one item is sensed; and
transmit the voice instruction to a different computer if selection of the one item is not sensed or if the instruction substance is judged to be inexecutable.

28. A display device connected to a voice input apparatus capable of inputting a voice of a user, comprising:
a display;
a controller; and
a communicator,
wherein the controller
displays a display screen including a plurality of selectable items on the display,
senses that one item of the plurality of items is selected on the display screen of the display,
recognizes instruction substance from first voice information representing the instruction substance and executes the instruction substance if a voice instruction including the first voice information is received from the voice input apparatus when selection of the one item is sensed, and
instructs the communicator to transmit the voice instruction to a different computer if selection of the one item is not sensed or if the instruction substance is judged to be inexecutable.
